# EUROPEAN PATENT SPECIFICATION

(11) **EP 2 899 095 B1**
(45) Date of publication and mention of the grant of the patent: **21.12.2016**
(21) Application number: 14152729.1
(22) Date of filing: 27.01.2014
(51) Int. Cl.: B62D 1/04

(54) **A steering assembly**
Lenkanordnung
Ensemble de direction

(43) Date of publication of application: 29.07.2015
(73) Proprietor: Gealan Formteile GmbH, 95145 Oberkotzau (DE)
(72) Inventor: Saunus, Christian, 08223 Grünbach (DE)
(74) Representative: Fleuchaus, Michael A.

(56) References cited:
- US-A- 5 085 466
- US-A1- 2007 290 494
- US-A1- 2011 139 535

## Description

The present invention is directed to a steering mechanism for a vehicle, for example a steering wheel of an automobile.

Steering mechanisms are devices used to control the movement of a vehicle. Upon manipulation of the steering mechanism, the vehicle is steered in a corresponding direction. For example, in an automobile, a steering wheel is typically circular and can be rotated to the left and to the right to effect steering; when a driver turns the steering wheel of the automobile to the left, the automobile will move in the left direction, and similarly for the right.

In conventional steering mechanisms, the steering wheel is fixed in one plane during operation of the vehicle and can only be rotated. Additionally, the steering wheel is generally tilted at an angle such that the top of the steering wheel (12 o'clock position) is located further from the driverthan the bottom of the steering wheel is to the driver.

The driver of the vehicle typically grasps the left and right portions of the steering wheel in the neutral position (often referred to the 9 o'clock and 3 o'clock positions, or 10 o'clock and 2 o'clock positions). When the steering wheel is rotated, the driver's arms are thus brought to a respective position above and below the neutral position. However, in this situation, both of the driver's arms are put in awkward and uncomfortable positions. Due to the orientation of the steering wheel with respect to the driver as well as the automobile, the driver's arm brought below the neutral position will be forced against the driver's body and be quite cramped. This is a result of the distance between the driver's arm and the steering wheel becoming shorterthan in comparison with the neutral position. Conversely, the driver's upper arm will need to extend and stretch since the distance between the driver's arm and the steering wheel has become greater in comparison with the neutral position. The larger the tilt angle of the steering wheel with respect to the driver, the more this effect is amplified.

Firstly, this cramping and stretching of the arms may cause discomfort, specifically for elderly people or other people with restricted mobility. Secondly, such cramping and stretching is considered a safety hazard as it limits the amount of rotation by which a driver can safely and accurately operate the steering wheel, specifically in dangerous situations or at large angles of rotation. For workers who are required to operate vehicles for long periods of time (e.g., taxi drivers, bus drivers or transporters), this can lead to acute or chronic pain and reduce the quality of life for the individual. Moreover, safety may be impeded as the driver's secure grip of the steering wheel may be affected by a cramping or excessive stretching of the arms, which may also potentially lead to more frequent shifting of the hands during a steering operation.

Accordingly, the object of the invention is to provide a steering mechanism for a vehicle which overcomes the problems of the prior art and, in particular, improve a driver's driving comfort as well as provides for a safer and more accurate driving.

US 5 085 466 discloses the preamble of claim 1.

This object is at least partially solved by a steering assembly according to the invention, the steering assembly being used in an automotive vehicle. The steering assembly of the invention comprises a steering wheel, the steering wheel being rotatable about a rotation axis, and defining a plane substantially perpendicular to the rotation axis, and a steering wheel mount supporting the steering wheel through a joint, the joint allowing tilting of the steering wheel about a tilt axis, the tilt axis being substantially perpendicularto the rotation axis, and wherein tilting of the steering wheel about the tilt axis changes a vertical angle of the plane with respect to the steering wheel mount.

The steering assembly of the invention is characterized in that the steering wheel or the steering wheel mount has one or more guide elements arranged at a side facing the steering wheel mount or the steering wheel, respectively, the one or more guide elements being radially spaced from the rotation axis, and the steering wheel mount or the steering wheel has one or more substantially circular control faces, the control faces (6, 6a, 6b, 6c) arranged at a side of the steering wheel or the steering wheel mount facing the respective other, and the control faces engaging with at least one of the guide elements, and wherein at each rotational position of the steering wheel, the one or more guide elements support the steering wheel in a predefined position with regard to the tilt axis so as to define the vertical angle of the plane with respect to the surface of the steering wheel mount.

As a result of this configuration, the steering wheel according to the present invention is tilted during rotation in a defined manner that is depending on the angle of rotation. This allows the driver's arms to be maintained at a more comfortable distance from the steering wheel even during rotation and reduces cramping. Within the context of the present invention, the term engaging is to be understood as substantially contacting and asserting some control on the guide elements over the circular length of the control faces. In essence control of the guide elements relate to the control of the distance of the steering wheel from the steering wheel mount at the position where the guide element engages the control face. Typically, the circular control face will be the variable component while the guide element is of a substantially fixed length. In this sense, it is the variable component which controls the distance of the steering wheel from the steering wheel mount at the position of the guide element via the fixed length guide element.

The tilting of the steering wheel with respect to the steering wheel mount during a turning of the steering wheel is effected by the engagement between the guide elements and the circular control faces. These components in combination are able to adjust the distance between the steering wheel mount and the steering wheel as the wheel is being rotated around the rotation axis and thus the guide element moved along the control face. Specifically, rotation of the steering wheel about the rotation axis causes the guide elements to travel along the circular control face. By way of the specific shape of the control face, this leads to portions of the steering wheel being pushed away from or pulled towards the steering wheel mount and, thus, the steering wheel tilted at specific angles depending on the rotation angle.

In an embodiment, the steering assembly is characterized in that each of the at least one circular control faces has at least one portion of increased or decreased elevation in a direction substantially parallel to the rotation axis, so as to cause at least one guide element engaging with said control face to exert a pushing or pulling force, respectively, on the steering wheel in a direction parallel to the rotation axis and away from or towards the steering wheel mount, respectively, at a rotational position of the steering wheel where the at least one guide element is coincident with the at least one portion.

The engagement of the circular control faces with the guide elements allows the elevation of the control faces to affect the tilt of the steering wheel at a position of the engagement. The desired tilt of the steering wheel can thus easily be controlled via the design of the control face or faces. Elevation can be understood as the difference in height of the control face at a particular position with respect to the plane of the steering wheel or steering wheel mount in a neutral position(whichever component the control face is affixed to). If the height is greater at a specific position of the control face relative to the height of the control face for a neutral position then the elevation is increased.

Where the elevation is increased at the at least one portion, the guide element engaging with the control face will be moved away from the steering wheel mount or the steering wheel, respectively, when traveling along the control face at the said at least one portion, thus effecting the tilting of the steering wheel relative to the steering wheel mount.

As an example, the elevation of the control face may be increased by an increased thickness thereof, wherein thickness is the dimension of the control face in a direction substantially parallel to the rotational axis of the steering wheel. However, the present invention is not limited in this regard. Any form of changing the elevation of the at least one control face with respect to the steering wheel mount or the steering wheel lies within the scope of the invention. For example, alternative to control faces of varying thicknesses, the steering wheel mount itself may have an imprinted design which affects the elevation of control faces of constant thickness throughout.

In an embodiment of the invention, the steering assembly is further characterized in that the vertical angle of the plane defined by the steering wheel increases in rotational positions between 0°and ±90° and between ±180° and ±270°, that is, within the context of this feature, the vertical angle shifts towards being more vertical than horizontal. The vertical angle decreases, that is, within the context of this feature, the vertical angle shifts towards being more horizontal than vertical in rotational positions between ±90° and ±180° and between ±270° and ±360°. An increasing vertical angle can also be defined as the plane of the steering wheel increasing with respect to a plane of the steering wheel mount and a decreasing vertical angle is when the plane of the steering wheel is decreasing back to a position where the plane of the steering wheel is returning to the neutral position.As can be appreciated, the vertical angle of the plane is increased or decreased by a varying elevation or varying elevations of the control face(s) at a predefined portion or at predefined portions, respectively..

This way, the driver's arms can be maintained as similarto the neutral position as possible and cramping of the arms minimized, by having the steering wheel tilted during its rotation, that is, increase or decrease the vertical angle of the plane, as the case may be. Specifically, the hand at the top of the steering wheel is brought closer to the driver and the hand at the bottom of the steering wheel brought further from the driver than in the conventional steering wheel so that a cramping or excessive stretching of the arms is prevented.

Within the context of this specification, the rotational angle of the steering wheel is defined by the angular deviation of the top of the steering wheel, ie. the 12 o'clock portion from the steering wheel's neutral position, ie. the "straight" position.

In another embodiment, at least one of the guide elements is supported by a resilient element against the steering wheel or the steering wheel mount, respectively. The resilient element is preferably a spring, compressible sponge, an element made of an elastic plastic material or the like but is not limited thereto. The resilient element is included to facilitate the proper and smooth engagement of the guide elements with the control faces.

Having a resilient element as opposed to a rigid one provides a certain flexibility and tolerance for the exact elevation shape and contour of the circular control face. A more comfortable and fluid rotation of the steering wheel is provided while a solid feel and secure control that is not too loose is still maintained.

In yet another embodiment, the joint is located in either the steering wheel or the steering wheel mount. The joint allows the rotation and tilt of the steering wheel about the respective rotation and tilt axis thereof. Providing the joint in the steering wheel mount would allow the arm connected to the steering wheel to swivel while providing the joint in the steering wheel would restrict the movement to mainly the steering wheel itself, fixing the arm in place. Depending on the specific application, conditions (such as the distance between the steering wheel and the steering wheel mount) and/orthe vehicle for which the steering wheel is used with, one configuration may be preferable over the other. In a further embodiment the number of control faces of the steering assembly is less than or equal the number of guide elements, and, preferably, the number of guide elements is 3 and the number of control faces is ≤ 3. More control faces and elements would lead to a more stable and controlled structure but would increase the complexity, parts and cost of manufacture.

In the minimal arrangement, a single guide element provided along a single control face can be used. This would be the most cost efficient configuration requiring the least components and hence easiest to manufacture but lacks some of the stability, smoothness and control as compared to other configurations featuring more guide elements and control faces. For example, in embodiments with more than one guide element and one or more control face, the steering wheel is better supported in a forward and backward direction so that for every tilt angle a more stable and solid positioning of the steering wheel in its vertical orientation may be obtained.

A configuration with three guide elements and three or less control faces has been found to provide an optimal balance of the steering wheel in all rotational positions and allows good control and smoothness of the tilting movement. In particular, the movement about the forward and backward directions is substantially locked, and the plane of the steering wheel can be precisely managed.

The steering assembly may be used in a motor vehicle, preferably a bus or a commercial vehicle, specifically a lorry. Similarly, the invention may also be beneficial in sports car applications, such as high speed or rally cars where fast steering with few hand shifts is required and driver's space impeded. Oppositely, the effects of the present steering assembly may also be very beneficial to the operators of large vehicles and those that are required to spend a large amount of time operating such vehicles.

Depending on the application of the invention, in use, at a rotational position of Φ=0°, the plane defined by the steering wheel is preferably positioned at a vertical default angle (α0) of between 20° and 60° with respect to a horizontal base of the motor vehicle. This is a typical orientation of the steering assembly in vehicles.

The features and benefits of the invention will become even more apparent in the light of the following detailed description of exemplary embodiments with reference to the attached drawings in which
- Fig. 1: is a frontal schematic view of the steering assembly in a neutral position according to the present invention;
- Fig. 2: is a cross-sectional schematic side view of the steering assembly in a neutral position according to the present invention;
- Fig. 3: is a frontal schematic view of the steering assembly in a rotated position according to the present invention;
- Fig. 4: is a cross-sectional schematic side view of the steering assembly in a rotated position according to the present invention;
- Fig. 5: is a schematic view of the control faces according to one embodiment of the present invention;
- Fig. 6: is a cross-sectional schematic side view of the steering assembly according to an alternative embodiment of the present invention;
- Fig. 7: is a graph displaying the relationship between the rotation angle and the tilt angle of a steering assembly according to an exemplary embodiment of the present invention.

The following description is not intended to limit the scope of the present invention but describes an exemplary embodiment of the present invention to help illustrate the objective and realization of the invention in a concrete embodiment. Same reference numbers in the figures indicate same elements or elements with similar function.

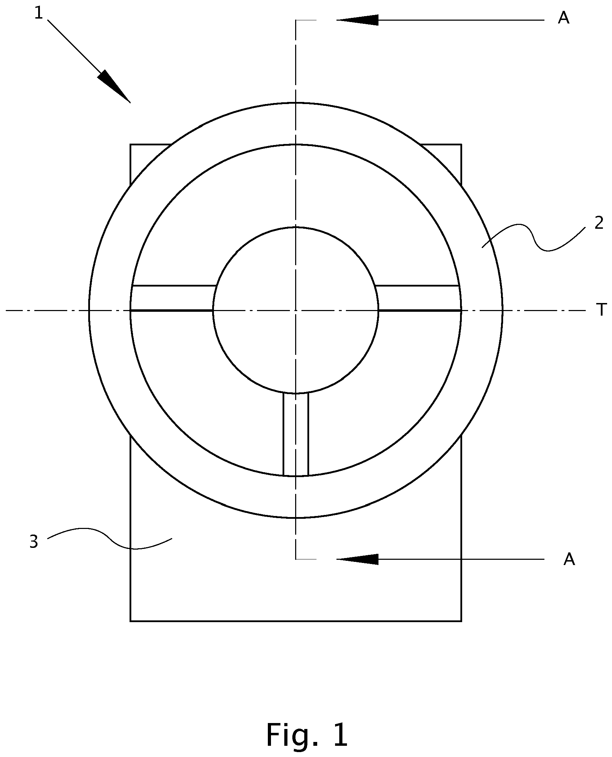

Fig. 1 depicts a steering assembly 1 according to a first embodiment of the present invention. As seen from the figure, the main components of the steering assembly 1 are the steering wheel 2 and a steering wheel mount 3. While a generic circular steering wheel 2 with a rectangular steering wheel mount 3 are shown, the present invention is not limited to such shapes for these components.

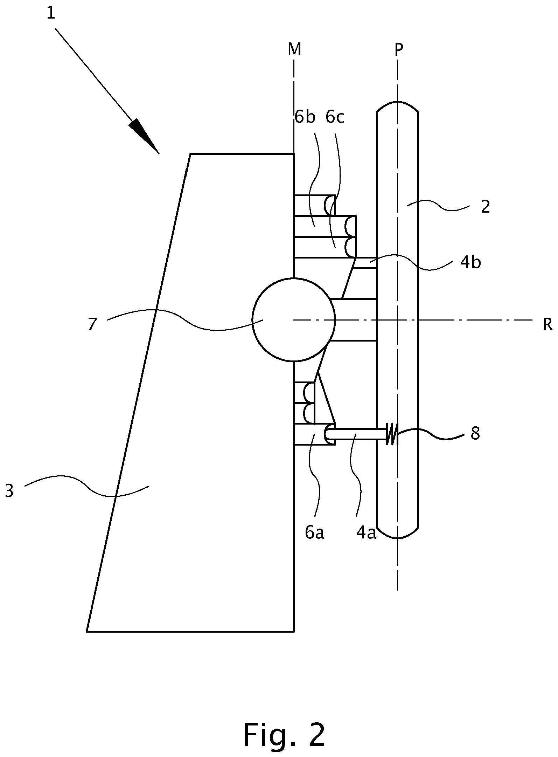

A horizontal tilt axis T is also shown by a dotted line. When the steering wheel 2 is rotated and consequently tiled as will be explained further below, the steering wheel 2 will be tilted with respect to this axis T. A positive tilt angle of the steering wheel 2 is considered as a tilt of the top portion of the steering wheel in the direction towards the viewer, away from the steering wheel mount 3. Conversely, a negative tilt angle is considered as a tilt in the direction away from the viewer, towards the steering wheel mount 3. Due to the fixture of the steering wheel 2 to the steering wheel mount 3 by a joint 7 (shown in Figure 2), a positive tilt of the top portion of the steering wheel 2 will cause its lower portion to have a corresponding negative tilt.

With reference to Fig. 2, a cross sectional side view of the steering assembly 1 along the line A-A of Fig. 1 is shown. This drawing shows the additional elements of the steering assembly 1 according to the present invention for effecting and controlling the tilting of the steering wheel 2.

Ajoint 7 connected to a shaft to the steering wheel 2, preferably a rotational shaft, is located substantially in the steering wheel mount 3. Within the context of this invention, this may also include a location of the joint 7 outside the steering wheel mount, for example, close to the plane defined by the control faces.

Alternatively, the joint may be connected by a shaft to the steering wheel mount 3 and located in or close to the steering wheel 2. The joint 7 serves to mechanically couple the steering wheel 2 to the steering wheel mount 3 and to provide a fixed range of rotational and tilt movement. In addition to this, the joint may be used for transmission of the steering wheel's rotational movement, e.g. to mechanically control the steering of a vehicle.

In the embodiment depicted in Fig. 2, the joint is in the form similar to a ball bearing. This is allows for 6 degrees of freedom of the steering wheel. However, any type of joint that provides such movements, and optionally also transmission of rotational momentum about the steering wheel axis, would also be a suitable alternative, such as, for example, a cardan joint.

Further, in the embodiment of Fig. 2, the steering wheel mount 3 has three circular control faces 6a to 6c on a surface facing the steering wheel 2. On the surface of the steering wheel 2 facing the steering wheel mount 3, a set of guide elements 4a to 4c corresponding to the circular control faces 6a to 6c are provided, the guide elements each engaging with one of the control faces 6a to 6c. Each guide element is fixed to a predetermined position on the steering wheel 2. A resilient element 8 may be provided to maintain and aid the engagement of the guide element 4a to the control face 6a. The resilient element may, for example, be in the form of a spring.

Due to the initial placement of the guide elements in the neutral position of the steering wheel 2 in this embodiment and the cross-section A-A showing the right side of the steering assembly 1, the guide element 4c is not visible in Fig. 2.

While three circular control faces and three guide elements are described on the steering wheel mount 3 and the steering wheel 2, respectively, in this embodiment, the present invention is not limited as such. In an alternative embodiment, the circular control faces may be provided on the steering wheel 2 and the guide elements may be provided on the steering wheel mount 3. Preferably, in such an embodiment, the joint 7 would also be located in the steering wheel.

As shown in Fig. 2, each of the circular control faces 6a-6c may have a groove on the end facing the steering wheel 2. The guide elements 4a-4c engage a respective control face 6a-6c via these grooves which the guide elements travels along during rotation of the steering wheel. Each of the circular control faces also has a varying elevation along its circumference. In the example of Fig. 2, the thickness of the control faces provides for the variation in elevation.

In the section of the control faces 6a-6c above the joint 7 in Fig. 2, the thickness of the outer control face 6a is of a medium (or neutral) thickness, while the thickness of the middle control face 6b and inner control face 6c are of a large thickness. In the section of the control faces 6a-6c below the joint 7, the thickness of the outer control face 6a is of a medium/neutral thickness while the middle control face 6b and inner control face 6c are of a small thickness. In this context, thickness is to be understood as the control faces height with respect to the steering wheel mount.

When a guide element passes over a certain position of the control face during rotation of the steering wheel, the thickness of the control face at that position will determine whether a portion of the steering wheel fixed to the guide element is pushed towards the driver and thus tilted in his direction.

In the neutral position of the embodiment in Fig. 2, each of the guide elements 4a-4c are engaged with a control face 6a-6c in which that portion has a medium/neutral thickness. No tilt is exerted on the steering wheel in this position. This is shown by the plane P of the steering wheel 2 being parallel with the surface M of the steering wheel mount 3. In Fig. 2, the plane P has an orientation parallel with the surface M of the steering wheel mount merely for illustrative purposes; the planes P and M may have arbitrary arrangements with respect to each other in the steering wheel's neutral position.

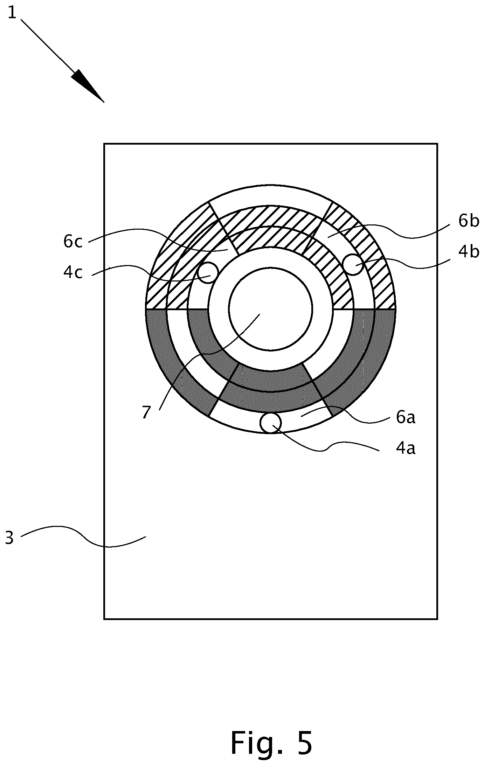

Jumping to Fig. 5, a schematic diagram of the thicknesses distribution of the circular control faces 6a-6c along their circumference is shown. In Fig. 5, the white portions represent medium/neutral thickness, the shaded portions represent a small thickness, and the striped portions represent a large thickness.

While discrete lines are shown separating portions of the control faces 6a-6c having different thicknesses, this is only shown for illustrative purposes only. In practice the thicknesses of the control faces changes gradually and each section of the same thickness can also vary in different levels along such section. For example, a portion labelled as being thicker than the other portions (i.e., striped portion) varies between a range of thicknesses which are just thicker than the medium/neutral thickness and up to double the thickness of the medium/neutral thickness.

When a portion transitions to a portion of a lesser thickness, the thickness will gradually lessen to a thickness of just a little thinner than the medium/neutral thickness and zero thickness. Gradual transitions of the thicknesses of the control faces provides for a fluid rotation and tilt of the steering wheel.

The location of the guide elements 4a-4c in the neutral position of the steering wheel 2 is also depicted in Fig. 5. As described above, the guide elements 4a-4c in the neutral position engage the control faces 6a-6c at portions that are of medium thickness (i.e., all elements 4a-4c lie in white portions). Providing three equally spaced guide elements supporting the steering wheel against the control faces is optimal for its natural stability.

Fig. 5 shows that in each control face 6a-6c, portions of increased thickness are provided in the upper half of the control face, while portions of decreased thickness are provided in the lower half of the control face. The control faces 6a-6c have this configuration in order for the upper portion of the steering wheel 2 to be tilted closer to the driver during rotation and the lower portion of the steering wheel 2 to be tilted away from the driver. This removes some of the discomfort created by the conventional steering wheel during rotation in which the driver's arm in the lower portion of the steering wheel is squeezed against the body and the driver's arm in the upper portion of the steering wheel to be brought too far away from the driver.

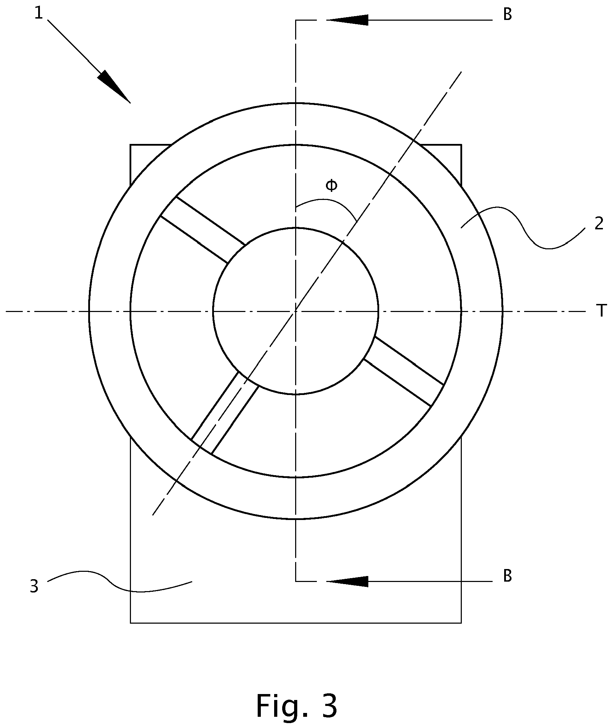

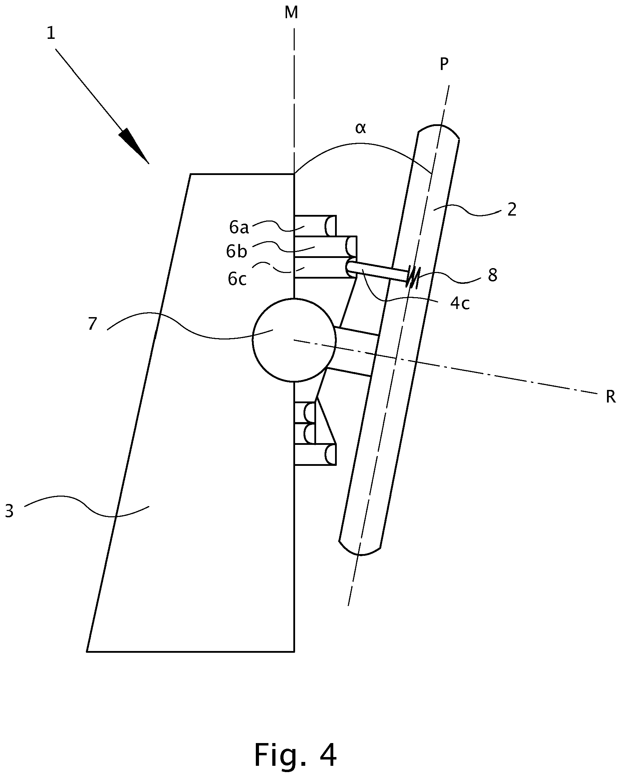

Referring now to Fig. 3, a front schematic view of the steering assembly 1 similar to that of Fig. 1 is shown. However, the steering wheel 2 in this situation has been rotated by an angle Φ to the right with respect to the neutral position as shown in Fig. 1. While not representable from this view, the steering wheel's top portion is now tilted towards the driver while its lower portion is tilted away from the driver. This can be seen in Fig. 4.

Fig. 4 represents a cross-sectional side view of the steering assembly 1 along the line B-B when the steering wheel 2 is rotated as in Fig. 3. In this situation, the guide element 4c, which was located in the left half of the steering assembly 1 and thus previously not shown in Fig. 2, is now visible. In this position where the steering wheel 2 rotated to the right, the guide element 4c engages the corresponding control face 6c at the position where the line B-B is drawn above the joint 7.

As previously noted, the thickness of the control face 6c at this position is greater than the normal thickness at the neutral position. Consequently, this causes the control face 6c to exert a pushing force on the portion of the steering wheel 2 via the guide element 4c in the direction of the rotation axis R away from the steering wheel mount 3. An angle α between the plane P of the steering wheel 2 and the surface of the steering wheel mount M is created as shown. The angle α is shown for illustrative purposes only and the actual angle may be subtler than shown (less than 10°). The angle is adjusted accordingly and controlled via the thickness of the control faces 6a-6c and the length of the guide elements 4a-4c.

In operation the driver's left arm would now be positioned nearer the top of the steering wheel 2 during this rotation and the driver's right arm would be positioned nearer the bottom of the steering wheel 2. Since the top portion of the steering wheel 2 is now tilted towards the driver, the driver's left arm maintains a distance more similarto that as in the neutral position instead of being pulled farther away from the driver. Conversely, since the bottom portion of the steering wheel 2 is now tilted away from the driver, the driver's right arm also maintains a distance more similar to that as in the neutral position instead of being pushed closerto the driver.

It will be appreciated that the same effect is achieved rotating the steering wheel 2 to the left except the driver's right arm will be at the top of the steering wheel 2 and the driver's left arm will be at the bottom of the steering wheel 2. Under this configuration the driver is able to rotate the steering wheel in a more comfortable manner.

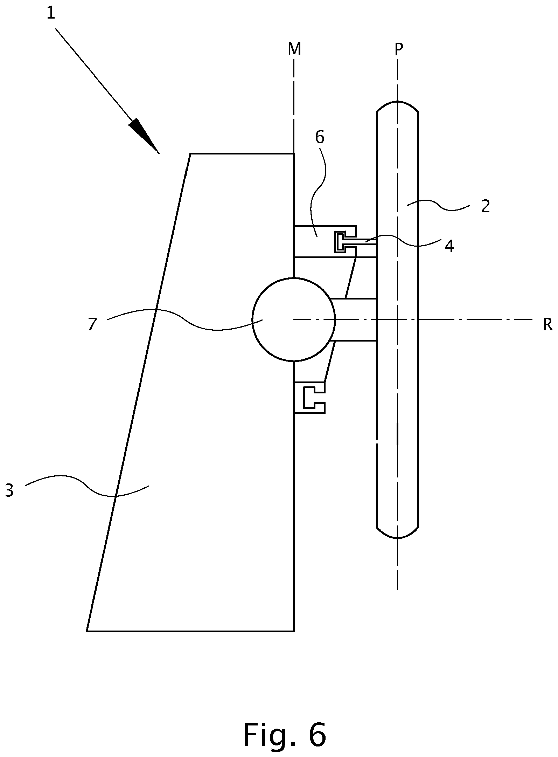

Fig. 6 shows an alternative embodiment of the present invention. In this embodiment only one control face 6 and one guide element 4 is required, however, multiple may equally be provided. In orderto maintain stability underthis configuration, the engagement mechanism between the control face 6 and guide element 4 differs from that in the first embodiment. The engaging end of the guide element 4 is formed of a T-shape while the receiving end of the control face 6 has a corresponding T-groove for receiving the engaging end of the guide element 4. As can be seen from the figure a spring 8 may no longer be necessary in this embodiment due to this coupling.

As in the case of the first embodiment, rotation of the steering wheel 2 will cause the guide element 4 to travel along the length of the control face 6. By way of the T-shaped guide element and groove of the control face, the guide element can no longer only exert a pushing force on the steering wheel - at the position where it is located at the wheel - but similarly also a pulling force. This way, since the steering wheel is supported by the guide element against the control face both ways, that is, towards and away from the steering wheel mount, less than 3 guide elements may still provide for a sufficiently stable steering assembly.

Also, as in the case of the first embodiment, the elevation of the control face 6 will determine the steering wheels tilt angle with respect to the plane P, since, at the position where the guide element 4 contacts the control face 6 the guide element will produce a pushing force on the steering wheel at a portion of increased elevation while the guide element will produce a pulling force on the steering wheel at a portion of decreased elevation. In this context, the elevation of the control face may be regarded as the height or distance of the groove with respect to the steering wheel mount.

While a T-shaped guide element 4 and a corresponding control face 6 is shown in Fig. 6, the present invention is not limited to this construction. Other variations of engaging mechanisms between different numbers of guide elements 4 and control faces 6 could be used with the same interaction being maintained. For example, instead of a T-shape, the guide element 4 could include a ball or anti-friction bearing at the engaging end and the control face 6 would have a corresponding receptacle for the ball bearing. For another example, two guide elements 4 could also be provided on opposite sides of a single control face 6 for better stability and control over the desired tilt angle.

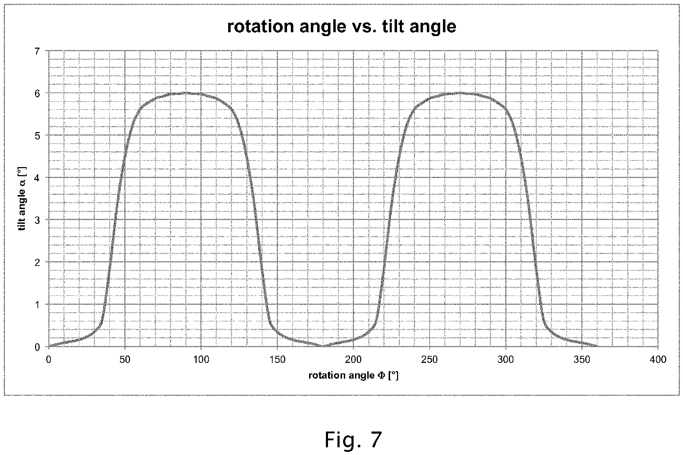

Fig. 7 shows a graph demonstrating the relationship between the rotation angle Φ and the tilt angle α for an exemplary embodiment of the present invention. At the origin of the graph is the neutral position at 0° where the steering wheel is not tilted. As the steering wheel is rotated the tilt angle gradually increases peaking when the rotational angle Φ is about 90°. In this example the peak tilt angle α is about 6° from the neutral plane. Further rotation of the steering wheel will cause the tilt angle to decrease. When the rotational angle Φ reaches about 180°, the steering wheel is once again substantially parallel to the surface of the steering wheel mount as in the neutral position (i.e., not tilted). A rotation beyond Φ =180° will essentially lead to a similar relationship as in the case of 0°≤Φ≤180°.

The present invention is designed in this manner since it is assumed that the driver will switch hands at an angle Φ between 90° and 180° and, at a rotational angle Φ of 180° grasp the steering wheel substantially as in the neutral position (9/10 o'clock and 3/2 o'clock positions with the left and right hands, respectively). Further rotation of the steering wheel to Φ=360° position (one full rotation) follows the same pattern of increasing and decreasing tilt angles. It will be appreciated that the peak tilt angle α can be set higher or lower than 6° and the rate of increase or decrease can be adjusted independently.

While various embodiments of the invention have been shown and described, the description is to be considered as illustrative rather than restrictive.

## Claims

1. A steering assembly (1) comprising:
a steering wheel (2), the steering wheel being rotatable about a rotation axis (R), and defining a plane (P) substantially perpendicular to the rotation axis; and
a steering wheel mount (3) supporting the steering wheel (2) through a joint (7), the joint (7) allowing tilting of the steering wheel (2) about a tilt axis (T), the tilt axis (T) being substantially perpendicular to the rotation axis (R), and wherein tilting of the steering wheel (2) about the tilt axis (T) changes a vertical angle (α) of the plane (P) with respect to the steering wheel mount (3),
**characterized in that**
the steering wheel (2) or the steering wheel mount (3) has one or more guide elements (4, 4a, 4b, 4c) arranged at a side facing the steering wheel mount (3) or the steering wheel (2), respectively, the one or more of guide elements (4, 4a, 4b, 4c) being radially spaced from the rotation axis (R);
the steering wheel mount (3) or the steering wheel (2) has one or more substantially circular control faces (6, 6a, 6b, 6c), the control faces (6, 6a, 6b, 6c) arranged at a side of the steering wheel (2) or the steering wheel mount (3) facing the respective other, and the control faces (6, 6a, 6b, 6c) engaging with at least one of the guide elements (4a, 4b), and wherein
at each rotational position (Φ) of the steering wheel (2), the one or more guide elements (4a, 4b) support the steering wheel (2) in a predefined position with regard to the tilt axis (T) so as to define the vertical angle (α) of the plane (P) with respect to the surface of the steering wheel mount (3).

2. A steering assembly according to claim 1, **characterized in that** each of the at least one circular control faces (6, 6a, 6b, 6c) has at least one portion of increased ordecreased elevation in a direction substantially parallel to the rotation axis (R), so as to cause at least one guide element (4, 4a, 4b, 4c) engaging with said control face (6, 6a, 6b, 6c) to exert a pushing or pulling force (F), respectively, on the steering wheel (2) in a direction parallel to the rotation axis (R) and away from or towards the steering wheel mount (3), respectively, at a rotational position (Φ) of the steering wheel (2) where the at least one guide element (4, 4a, 4b, 4c) is coincident with the at least one portion.

3. The steering assembly of any one of the preceding claims, **characterized in that** the vertical angle (α) of the plane (P) increases in rotational positions 0° < Φ < ±90° and ±180° < Φ < ±270° and decreases in rotational positions ±90° < Φ < ±180° and ±270 < Φ < ±360°.

4. The steering assembly of any one of the preceding claims, wherein at least one of the guide elements (4a, 4b) is supported by a resilient element (8) against the steering wheel (2) or the steering wheel mount (3), respectively.

5. The steering assembly of claim 4, wherein the resilient element (8) is a spring, a compressible sponge, an element made of an elastic plastic material, or the like.

6. The steering assembly according to any one of the preceding claims, wherein the joint (7) is located in the steering wheel (2).

7. The steering assembly according to any one of claims 1 to 4, wherein the joint (7) is located in the steering wheel mount (3).

8. The steering assembly according to any of the preceding claims, wherein the number of control faces (6a, 6b) is less than or equal the number of guide elements (4a, 4b), and, preferably, the number of guide elements (4a, 4b) is 3 and the number of control faces (6a, 6b) is ≤ 3.

9. Use of a steering assembly according to any of the preceding claims in a motor vehicle.

10. Use according to claim 9, wherein the motor vehicle is a bus or a commercial vehicle, specifically a lorry.

11. Use according to claim 9, wherein, at a rotational position of Φ = 0°, the plane (P) is positioned at a vertical default angle (α0) of between 20° and 60° with respect to a horizontal base of the motor vehicle.

## Patentansprüche

1. Lenkanordnung (1), umfassend:
ein Lenkrad (2), wobei das Lenkrad um eine Rotationsachse (R) drehbar ist und eine zu der Rotationsachse im Wesentlichen senkrechte Ebene (P) bestimmt; und
eine Lenkradbefestigung (3), die das Lenkrad (2) über ein Gelenk (7) stützt, wobei das Gelenk (7) ein Neigen des Lenkrads (2) um eine Neigungsachse (T) erlaubt, wobei die Neigungsachse (T) zu der Rotationsachse (R) im Wesentlichen senkrecht ist, und wobei ein Neigen des Lenkrads (2) um die Neigungsachse (T) einen Vertikalwinkel (α) der Ebene (P) bezogen auf die Lenkradbefestigung (3) verändert,
**dadurch gekennzeichnet, dass**
das Lenkrad (2) oder die Lenkradbefestigung (3) ein oder mehr Führungselemente (4, 4a, 4b, 4c) aufweist, die an einer der Lenkradbefestigung (3) beziehungsweise dem Lenkrad (2) zugewandten Seite angeordnet sind, wobei die ein oder mehr Führungselemente (4, 4a, 4b, 4c) von der Rotationsachse (R) radial beabstandet sind;
die Lenkradbefestigung (3) oder das Lenkrad (2) eine oder mehr im Wesentlichen kreisförmige Steuerflächen (6, 6a, 6b, 6c) aufweist, die Steuerflächen (6, 6a, 6b, 6c) an einer Seite des Lenkrads (2) oder der Lenkradbefestigung (3), die dem jeweils anderen zugewandt ist, angeordnet sind und die Steuerflächen (6, 6a, 6b, 6c) mit mindestens einem der Führungselemente (4a, 4b) zusammengreifen und wobei
in Jeder Drehposition (Φ) des Lenkrads (2) die ein oder mehr Führungselemente (4a, 4b) das Lenkrad (2) in einer vorbestimmten Position mit Bezug zu der Neigungsachse (T) stützen, um den Vertikalwinkel (α) der Ebene (P) bezogen auf die Oberfläche der Lenkradbefestigung (3) zu bestimmen.

2. Lenkanordnung nach Anspruch 1, **dadurch gekennzeichnet, dass** die mindestens eine kreisförmige Steuerfläche (6, 6a, 6b, 6c) jeweils mindestens einen Abschnitt mit vergrößerter oder verringerter Höhe in einer zu der Rotationsachse (R) im Wesentlichen parallelen Richtung aufweist, um zu bewirken, dass mindestens ein mit der Steuerfläche (6, 6a, 6b, 6c) zusammengreifendes Führungselement (4, 4a, 4b, 4c) in einer Drehposition (Φ) des Lenkrads (2), in der das mindestens eine Führungselement (4, 4a, 4b, 4c) mit dem mindestens einen Abschnitt übereinstimmt, auf das Lenkrad (2) eine Druck- beziehungsweise Zugkraft (F) in einer zu der Rotationsachse (R) parallelen Richtung und weg von beziehungswelse hin zu der Lenkradbefestigung (3) ausübt.

3. Lenkanordnung nach einem der vorstehenden Ansprüche, **dadurch gekennzeichnet, dass** der Vertikalwinkel (α) der Ebene (P) sich in den Drehpositionen 0° < Φ < ±90° und ±180° < Φ < ±270° vergrößert und sich in den Drehpositionen ±90° < Φ < ±180° und ±270° < Φ < ±360° verringert.

4. Lenkanordnung nach einem der vorstehenden Ansprüche, bei der mindestens eins der Führungselemente (4a, 4b) durch ein federndes Element (8) gegen das Lenkrad (2) beziehungsweise die Lenkradbefestigung (3) gestützt ist.

5. Lenkanordnung nach Anspruch 4, bei der das federnde Element (8) eine Feder, ein zusammendrückbarer Schaumstoff, ein aus einem elastischen Kunststoff hergestelltes Element oder dergleichen ist.

6. Lenkanordnung nach einem der vorstehenden Ansprüche, bei der das Gelenk (7) in dem Lenkrad (2) angeordnet ist.

7. Lenkanordnung nach einem der Ansprüche 1 bis 4, bei der das Gelenk (7) in der Lenkradbefestigung (3) angeordnet ist.

8. Lenkanordnung nach einem der vorstehenden Ansprüche, bei der die Anzahl der Steuerflächen (6a, 6b) kleiner als die oder gleich der Anzahl der Führungselemente (4a, 4b) ist und, bevorzugt, die Anzahl der Führungselemente (4a, 4b) 3 ist und die Anzahl der Steuerflächen (6a, 6b) ≤ 3 ist.

9. Verwendung einer Lenkanordnung nach einem der vorstehenden Ansprüche in einem Kraftfahrzeug.

10. Verwendung nach Anspruch 9, wobei das Kraftfahrzeug ein Bus oder ein Nutzfahrzeug, insbesondere ein Lastkraftwagen, ist.

11. Verwendung nach Anspruch 9, wobei in einer Drehposition von Φ = 0° die Ebene (P) bezogen auf eine horizontale Basis des Kraftfahrzeugs in einen vertikalen voreingestellten Winkel (α0) von zwischen 20° und 60° gestellt ist.

## Revendications

1. Ensemble de direction (1) comprenant:
un volant (2), le volant étant rotatif autour d'un axe de rotation (R), et définissant un plan (P) sensiblement perpendiculaire à l'axe de rotation ; et
un support de volant (3) supportant le volant (2) à travers un joint (7), le joint (7) permettant le renversement du volant (2) autour d'un axe de renversement (T), l'axe de renversement (T) étant sensiblement perpendiculaire à l'axe de rotation (R), et dans lequel le renversement du volant (2) autour de l'axe de renversement (T) modifie un angle vertical (α) du plan (P) par rapport au support de volant (3),
**caractérisé en ce que**
le volant (2) ou le support de volant (3) possède un unique ou plusieurs éléments de guidage (4, 4a, 4b, 4c) disposés sur un côté faisant respectivement face au support de volant (3) ou au volant (2), l'unique ou les plusieurs éléments de guidage (4, 4a, 4b, 4c) étant espacé radialement à partir de l'axe de rotation (R) ;
le support de volant (3) ou le volant (2) possède une unique ou plusieurs faces de commande (6, 6a, 6b, 6c) sensiblement circulaires, les faces de commande (6, 6a, 6b, 6c) disposées sur un côté du volant (2) ou du support de volant (3) faisant face l'autre respective, et les faces de commande (6, 6a, 6b, 6c) s'enclenchant avec au moins un unique des éléments de guidage (4a, 4b), et dans lequel
à chaque position rotative (Φ) du volant (2), l'unique ou les plusieurs éléments de guidage (4a, 4b) supportent le volant (2) dans une position prédéfinie par rapport l'axe de renversement (T) afin de définir l'angle vertical (α) du plan (P) par rapport à la surface du support de volant (3).

2. Ensemble de direction selon la revendication 1, **caractérisé en ce que** chacune des au moins une face de commande circulaire (6, 6a, 6b, 6c) possède au moins une partie d'élévation ascendante ou descendante dans une direction sensiblement parallèle à l'axe de rotation (R), afin d'inciter au moins un élément de guidage (4, 4a, 4b, 4c) à s'enclencher avec ladite face de commande (6, 6a, 6b, 6c) en vue d'exercer respectivement une force de poussée ou de traction (F) sur le volant (2) dans une direction parallèle à l'axe de rotation (R) et s'éloignant ou se rapprochant respectivement du support de volant (3), à une position rotative (Φ) du volant (2) où au moins l'unique élément de guidage (4, 4a, 4b, 4c) est concomitant avec au moins l'unique partie.

3. Ensemble de direction selon une quelconque des revendications précédentes, **caractérisé en ce que** l'angle vertical (α) du plan (P) augmente à des positions rotatives de 0° < Φ < ±90° et de ±180° < Φ < ±270°, et diminue à des positions rotatives de ±90° < Φ < ±180° et de ±270°< Φ < ±360°.

4. Ensemble de direction selon une quelconque des revendications précédentes, dans lequel au moins un unique des éléments de guidage (4a, 4b) est supporté par un élément résilient (8) respectivement contre le volant (2) ou le support de volant (3).

5. Ensemble de direction selon la revendication 4, dans lequel l'élément résilient (8) est un ressort, une éponge compressible, un élément fait d'une matière plastique élastique, ou similaire.

6. Ensemble de direction selon une quelconque des revendications précédentes, dans lequel le joint (7) est situé dans le volant (2).

7. Ensemble de direction selon une quelconque des revendications 1 à 4, dans lequel le joint (7) est situé dans le support de volant (3).

8. Ensemble de direction selon une quelconque des revendications précédentes, dans lequel le nombre des faces de commande (6a, 6b) est inférieur ou égal au nombre des éléments de guidage (4a, 4b), et le nombre des éléments de guidage (4a, 4b) est de préférénce de 3 et le nombre des faces de commande (6a, 6b) est ≤ 3.

9. Utilisation d'un ensemble de direction selon une quelconque des revendications précédentes dans un véhicule à moteur.

10. Utilisation selon la revendication 9, dans laquelle le véhicule à moteur est un autocar ou un véhicule commercial, spécifiquement un camion.

11. Utilisation selon la revendication 9, dans laquelle, à une position rotative de Φ = 0°, le plan (P) est positionné à un angle par défaut vertical (α0) compris entre 20° et 60° par rapport à une base horizontale du véhicule à moteur,
